# EUROPEAN PATENT SPECIFICATION

(11) **EP 1 681 207 B1**
(45) Date of publication and mention of the grant of the patent: **18.03.2009**
(21) Application number: 06000567.5
(22) Date of filing: 12.01.2006
(51) Int. Cl.: B60R 16/02

(54) **Channel activating device with a multipolar electrical connector of a hitch devices of a vehicle**
Kanalaktivierungsvorrichtung mit einem elektrischen mehrpoligen Stecker einer Anhängerkupplung eines Fahrzeuges
Dispositif d'activation de canaux avec un connecteur multipolaire d'un attelage d'un véhicule

(30) Priority: 17.01.2005 ES 200500070; 02.11.2005 ES 200502661
(43) Date of publication of application: 19.07.2006
(73) Proprietor: Enganches Y Remolques Aragon S.L., 50057 Zaragoza (ES)
(72) Inventor: Benito Monreal, Fernando, Calle B, parcela 77 50057 Zarogoza (ES)
(74) Representative: Schäfer, Matthias W.

(56) References cited:
- EP-A- 1 029 745
- DE-A- 3 819 639
- DE-A1- 10 047 471
- DE-A1- 19 501 925
- US-A- 5 030 938

## Description

As its title indicates, this descriptive report refers to a channel activating device of the type used along with the multipolar electrical connectors of the hitches installed on some vehicles for fastening a trailer or similar, wherein it controls and governs the trailer's electrical signals without direct consumption of current from the equivalent electrical signals of the automobile.

Hitches, mainly ball-type, are currently well-known and widely used, optionally installed on many vehicles as an addition for fastening a trailer, camper, etc. An example is the one described in Patent EP 98107007: *"Towing device for a vehicle with a ball hitch, detachable but lockable, equipped with an electrical outlet. "*

In compliance with the applicable legal regulations, all these hitch devices must incorporate a multipolar electrical connector to allow the different luminous indicators situated in the trailer (turn signals, brakes, flashers, fog lights, backup light, etc...) to be switched on in a synchronized manner with their equivalent elements in the towing vehicle, mainly the rear light assembly. In certain cases, this connector also serves to send electrical energy to the trailer, which is useful, for example, for campers and similar. These types of multipolar electrical connectors are mostly 7-pole, such as those described in Patent EP 87105400, *"Removable multipolar plug connection for the transmission of electrical currents, preferably for use in automobiles;* " or 13-pole, such as those found in Patent EP 95104903, *"Male plug, especially for the electrical connection of trailers,* " and Patent EP 91105209, *"Female plug for multipolar outlets. "*

Regardless of their class and type, all these electrical connectors are directly connected to the elements, indicators and lights of the towing vehicle, so that the trailer's electrical elements are connected in parallel with those of the vehicle, resulting in high consumption of electrical current, which tends to be the source of frequent problems, overloads and breakdowns due to excess consumption, in addition to the fact that this electrical current overload in the vehicle causes high heating in the conductor cables and other associated elements, with the resulting increase in the possibility of fire and a substantial decrease in safety, negatively impacting their service life.

The document DE 3819639 A discloses the preamble of claim 1.

EP 1 029 745 A2 discloses a complicated and costly channel activating device provided with multipolar electrical connectors, whereby it consists of a plurality of solid-state devices equipped with the proper input and output connectors for the different electrical signals. This channel activating device utilizes a microcontroller with a processor and transciever to control the solid state devices (transistor switches). Additionally, the microcontroller is utilized in monitoring the flow of current by detecting faults in the circuit and has the ability to shut down the power if a fault is detected.

DE 100 47 471 A1 discloses another channel activating device utilizing electronics similar to the microprocesor unit in EP 1 029 745 A2. Additionally, the electronics in DE 100 47 471 A1 uses current switches (diodes) to control the flow of power to the trailer lights.

These problems are particularly serious in the case of the latest generation vehicles, in which the great increase in electrical and electronic systems and devices has already created a certain internal overload in electrical consumption, which means that a further increase in electrical consumption when the trailer is connected, with the resulting increase in the problems, is hardly acceptable.

In some makes and models, mainly in the high-end vehicles, it is possible, on request, to ask the manufacturer to include separate electrical circuits for the trailer hitch which prevent these problems, but this option involves major drawbacks, mainly the high added cost that this entails for the vehicle, and the fact that it must be planned far in advance of buying the vehicle, which means that it is not applicable once the vehicle is purchased, or to vehicles of other makes or models.

Certain hitch manufacturers are also known to incorporate electromechanical relays into their models in an attempt to reduce these problems, but they present other, different problems, mainly due to the electromechanical nature of the electrical components, which are short-lived in an environment as hostile and vibratory as a vehicle, causing frequent breakdowns and operating problems, also due to the disintegration of the electrical contacts produced by the continuous connect-disconnect cycle, which produces opening and closing electric arcs in the contacts that end up destroying the relays' contact surfaces, thus preventing them from operating.

There have been certain attempts at improving these electrical connections between automobile and trailer, such as the one described in Patent EP 94119962, *"Electrical communications system for tractor and truck trailer,"* but the drawbacks and problems described above persist due to the use of electromechanical relays, in addition to the fact that they are specifically designed for communication between tractors or trucks and their trailers; adaptation to standard vehicles is difficult and complex due to the use of advanced electronic communication by digital data bus with a multiplex system.

The channel activating device covered by this invention has been conceived in order to solve the problems that currently exist with regard to the electrical connection between vehicles and trailers. It consists of a plurality of solid state amplifiers that act as current switches, according to claim 1.

The solid state amplifiers take the necessary electrical control signals from the connector block for the vehicle's rear lights and, when any of them is activated, produce the electrical connection of the corresponding output channel to the positive voltage of the vehicle's battery. Thus, each of the control signals produces the activation of its corresponding output channel, activation being understood as providing electrical current coming directly from the automobile's battery, without using the current from the vehicle's rear lights or any of its indicator elements. All consumption comes directly from the vehicle's battery. For safety reasons, it is advisable to insert a protective external fuse into the connection to the battery.

Moreover, some of these solid state amplifiers corresponding to certain channels are internally configured for optional operation in PWM (Pulse Width Modulation) mode, or in continuous mode (as described above), for those cases in which it is necessary to reduce consumption even further.

There is also a return light for the trailer's fog lights that, through another electronic switch, optionally causes automatic disconnection of the vehicle's fog lights when the trailer is connected, thus preventing possible blinding of the driver due to reflection in the trailer, or even a false signal to other drivers due to the special nature and power of these indicator lights, in addition, obviously, to the subsequent savings in electrical consumption.

There are two preferable variants: one of them with 6 activation channels, corresponding to the standard 7-pole connectors, and another with 7 activation channels, corresponding to the standard 13-pole connectors, in which the remaining 6 poles are connected directly, although it may be implemented with any other combination of activation channels that may appear in future needs and applications.

This channel activating device is normally installed between the multipolar electrical connector situated in the trailer hitch and the connector block for the rear lights, and is connected to the positive terminal of the battery and to the vehicle's electrical ground, corresponding to the battery's negative pole. The channel activating device is designed for use with vehicles that utilize the battery's negative pole connected to ground, which is virtually all of them, but there is also a variant, following the same operating principle, adapted to those vehicles that use the positive terminal connected to ground. It can also be used with different continuous battery voltages (12V, 24V, etc.). Thus, the channel activating device can be universally connected in any type of vehicle, regardless of make or model, which can be done both during the manufacturing process, and after the vehicle is sold.

The number and distribution of the input and output channels are variable and can be adapted to the different variables and needs, although they will preferably incorporate the following signals:
- ***FROM THE VEHICLE:*** brake light, left blinker, right blinker, left turn signal, right turn signal, fog light, return-vehicle fog light, battery positive and ground for the 6-pole version, adding the backup light in the 7-channel variant.
- ***FROM THE CONNECTOR FOR THE TRAILER**:* brake light, left blinker, right blinker, left turn signal, right turn signal and fog light for the 6-channel version, adding the backup light in the 7-channel version.

It is optionally possible to include in the same box the circuitry needed to detect and indicate a burned-out filament in any of the electrical signals used for luminous indication in the trailer or similar equipment connected to the vehicle. For this purpose, current sensing elements are incorporated into the output channels that detect the absence of electrical current in that channel when it is activated, detecting that the filament of the lamp associated with that channel has burned out and communicating this anomalous situation to a detection module, which centralizes the indicator signals coming from all current sensing elements, indicating a failure in any of the channels through a line that communicates with a warning device in the vehicle (which can be light or sound, indication on the vehicle's dashboard panel, or any combination thereof). In this case, one more connection terminal with the vehicle is obviously needed.

Moreover, the design also provides for optional inclusion, also in the same box, of the circuitry needed to disable the operation of the vehicle's rear parking sensors when connection of the trailer or similar is detected. For this purpose, a supplementary line is added in the connector for the trailer, which is electrically activated when the multipolar connector is physically inserted, the insertion being detected by a built-in control circuit that proceeds to deactivate the vehicle's rear parking sensors through an enabling line. In this case, one more connection terminal with the vehicle is needed, and one more with the trailer.

The channel activating device will be mounted inside a resistant box, preferably encapsulated in epoxy resin or a similar material to protect the internal electronic circuits and guarantee their immunity to humidity, vibrations and water, thus allowing optimum performance without breakdowns in an environment as hostile and harsh as an automobile. Encapsulating also guarantees the device's electrical insulation and prevents any type of manipulation or change in its internal characteristics. The box will be equipped with the proper electrical connectors for the connecting cables, these connectors being any of the types commonly used in the automobile industry, preferably a screw-down connector strip, with or without jumper.

The channel activating device described here provides multiple advantages over the systems that are currently available, the most important being that it prevents overloads and breakdowns in the automobile's electrical circuit due to excess electrical consumption.

Of note is the undeniable advantage involved in the use of solid state amplifiers acting as current switches, due to their lack of electromechanical problems, their ruggedness and virtually indefinite service life.

It is also very important to emphasize the advantage involved in adding to the device's original functions the capacity to monitor, detect and indicate burned-out lamp filaments in the trailer, with the resulting obvious improvement in driving safety, because the vehicle's driver can be warned, instantaneously and in real time, of the failure of any of the trailer's luminous indicators that could reduce its indication capabilities.

We should also note that it provides the undeniable advantage of making it possible, in those vehicles equipped with parking sensors, preferably of the type that are activated by proximity, to carry a trailer or similar device hitched to the rear without the towed elements causing false indications to the parking sensors that could deceive the driver or distort the distance measurements made by the vehicle's onboard computer.

Another important advantage is that, due to its characteristic design, it can be universally installed in any type and make of automobile at the same time that the mechanical hitch for the trailer is installed, without the need for prior installation or pre-installation.

It is also important to note that, since this is a compact module, it is quickly and easily installed, resulting in savings in labor and money.

It is important to emphasize the undeniable advantage provided by the epoxy resin or similar encapsulation, because it guarantees the device's immunity to humidity, vibrations and water, thus allowing optimum performance without breakdowns, guaranteeing electrical insulation and preventing any type of manipulation or change in its internal characteristics.

For a better understanding of the object of this invention, the attached drawing represents a preferential practical implementation of a channel activating device.

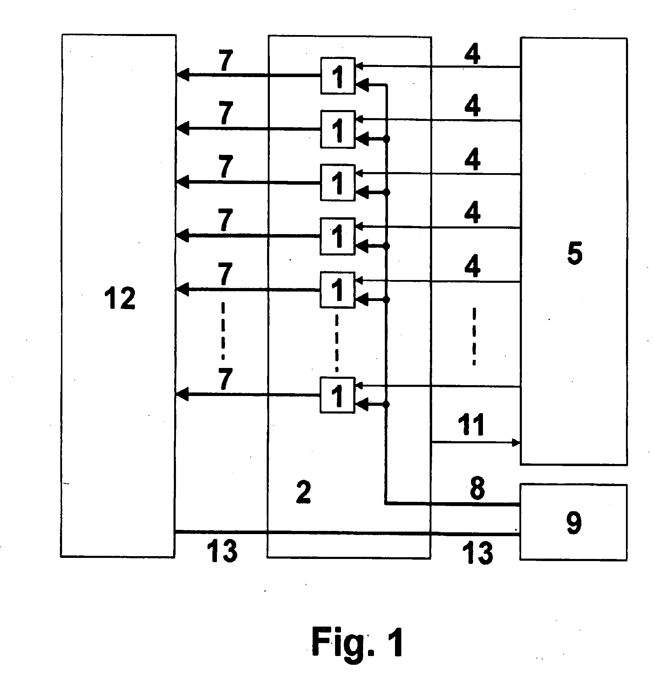

In the drawing, Fig. 1 shows a simplified generic block diagram of the device and its interconnection.

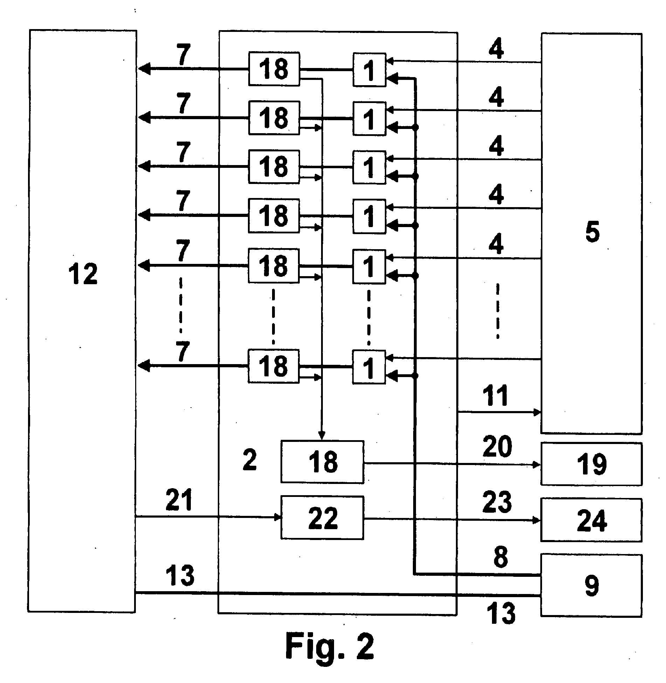

Fig. 2 shows a complete generic block diagram of the device and its interconnection, including all the circuitry options.

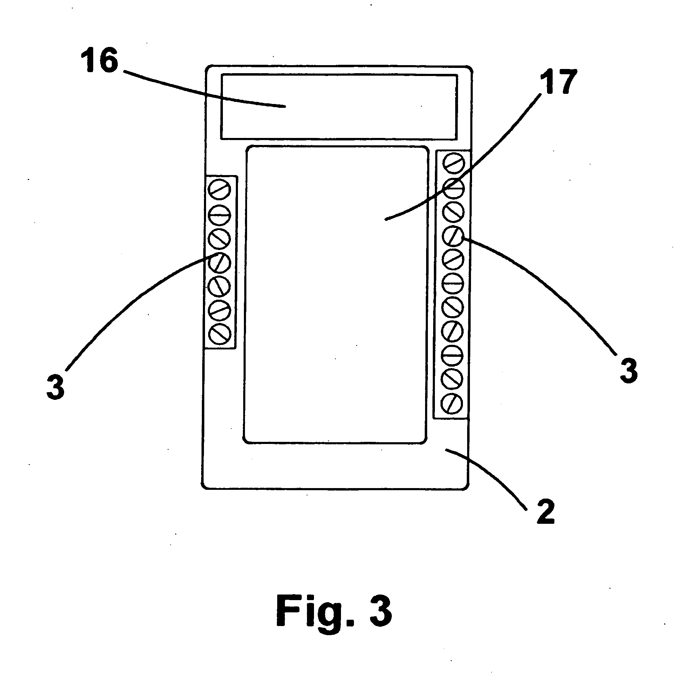

Fig. 3 shows an external view of an example of implementation of the device.

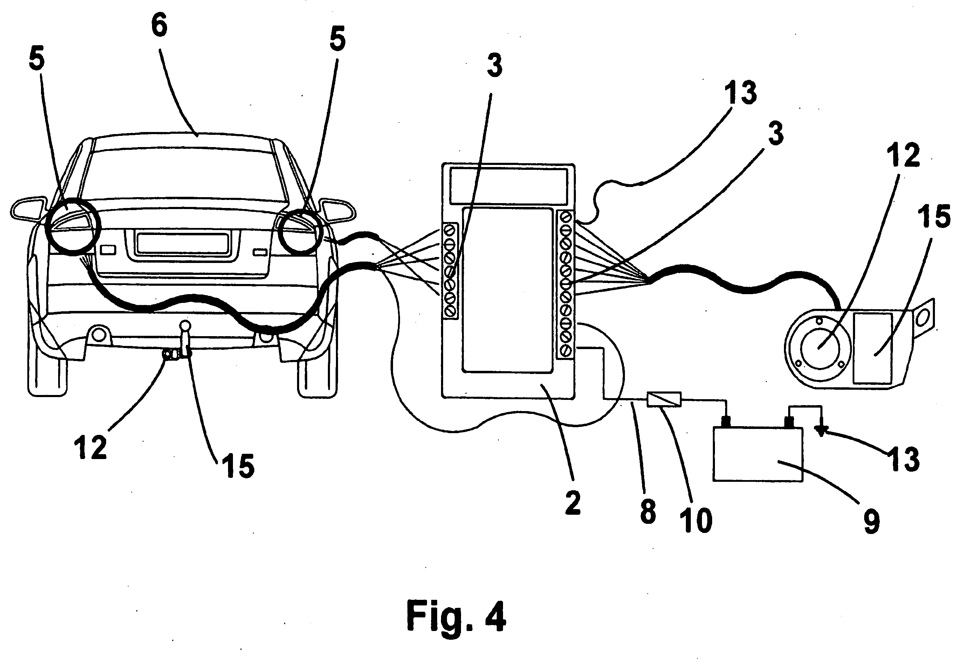

Fig. 4 shows a generic diagram of its connection in the vehicle.

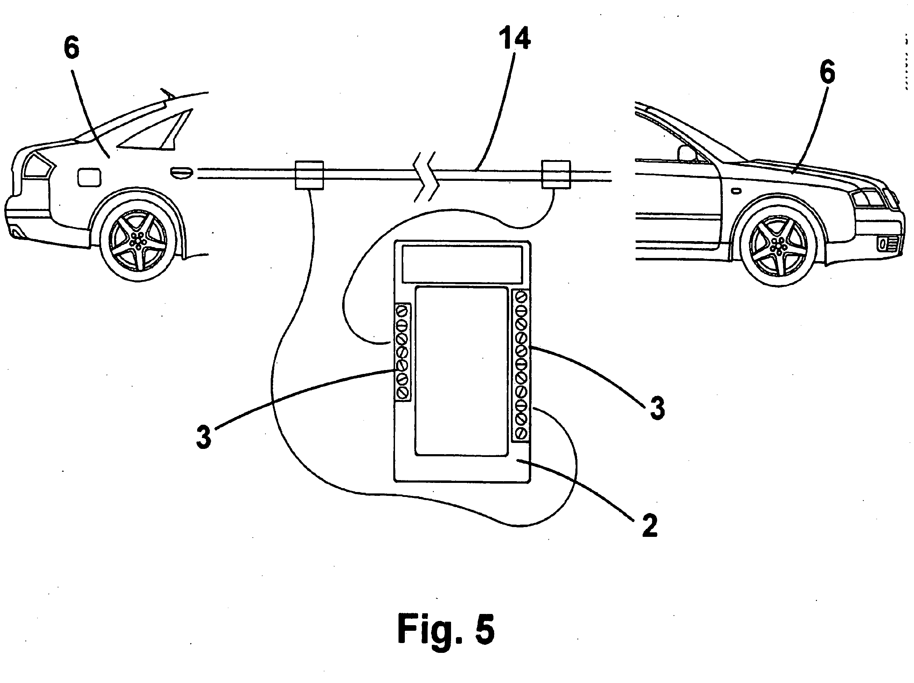

Fig. 5 shows a generic diagram of its connection in the vehicle in the case of installation for fog light switch.

As can be seen in the attached drawing, the channel activating device covered by this invention basically consists of a plurality of solid state amplifiers (1) acting as current switches and housed in an appropriate box (2), equipped with the proper input and output connectors (3) for the different electrical signals.

The solid state amplifiers take the necessary electrical control signals (4) from the connector block for the rear lights (5) of the vehicle (6) and, when any of them is activated, produce the electrical connection of the corresponding output channel (7) to the positive voltage (8) coming from the battery (9) of the vehicle (6). Thus, each of the control signals (4) produces the activation of its corresponding output channel (7), activation being understood to mean providing electrical current coming directly from the battery (9) of the vehicle (6), without directly consuming current from the rear lights (5). For safety reasons, it is advisable to insert a protective external fuse (10) in the connection to the battery (9). The proper connections to ground (13) will also be necessary.

Moreover, some of these solid state amplifiers (1) corresponding to certain output channels (7) can be internally configured for optional operation in PWM (Pulse Width Modulation) mode, or in continuous mode (as described above), for those cases in which it is necessary to reduce consumption even further.

There is also a return line (11) for the trailer's fog lights that, through another electronic switch, optionally causes automatic disconnection of the vehicle's fog lights (5) when the multipolar electrical connector (12) is connected. For this installation, it will be necessary to cut the original cabling (14) for the fog lights of the vehicle (6).

As we explained above, this channel activating device is normally installed between the multipolar electrical connector (12) situated in the hitch for the trailer (15) and the connector block for the rear lights (5) and connected to the positive terminal (8) of the battery (9) and the vehicle's ground (13), normally corresponding to the negative pole of the battery (9). As already explained above, the number and distribution of the input and output terminals (3) is variable and can be adapted to different needs. The box is also provided with tags or silk-screens (16, 17) with the corresponding connection instructions and information.

It is optionally possible to include in the same box (2) the circuitry needed to detect and indicate a burned-out filament in any of the electrical signals used for luminous indication in the trailer or similar equipment connected to the vehicle. For this purpose, current sensing elements (18) are incorporated into each of the output channels (7) that detect the absence of electrical current in that channel (7) when it is activated, detecting that the filament of the lamp associated with that channel has burned out and communicating this anomalous situation to a detection module (18), which centralizes the indicator signals coming from all current sensing elements (18) of the box (2), indicating a failure in any of the channels through a line (20) that communicates with a warning device (19) in the vehicle (which can be light or sound, indication on the vehicle's dashboard panel, or any combination thereof).

Moreover, the design also provides for optional inclusion, also in the same box (2), of the circuitry needed to disable the operation of the vehicle's rear parking sensors (24) when connection of the trailer or similar is detected. For this purpose, a supplementary line (21) is added that is electrically activated when the multipolar electrical connector (12) is physically inserted, the insertion being detected by a control circuit (22) built into the box (2) that proceeds to deactivate the vehicle's rear parking sensors (24) through an enabling line (23).

We are voluntarily omitting a detailed description of the features of the system described here or the component elements that comprise it, because we believe that the rest of these features are not covered by any of the claims.

Having sufficiently described the nature of this invention, as well as a way of putting it into practice, it only remains to be added that the description is not limiting, and several variations can be implemented, both in materials and in forms or sizes, providing the variations do not alter the essential nature of the characteristics that are claimed below.

## Claims

1. Channel activating device used along with the multi-polar electrical connectors (12) of the hitch devices installed on some vehicles for fastening a trailer or similar wherein current switches (1) are housed in an appropriate box (2), equipped with the proper input and output connectors (3) for the different electrical signals, **characterized in that** it consists of a plurality of solid state amplifiers (1) directly connected with a connector block for the rear lights (5) of the vehicle (6) for switching the solid state amplifiers (1) acting as the current switches, wherein some of the solid state amplifiers (1) corresponding to certain output channels (7) are internally configured for optional operation in Pulse Width Modulation mode.

2. Channel activating device according to the above claim, **characterized in that** it is installed between the multipolar electrical connector (12) situated in the hitch for the trailer (15) and the connector block for the rear lights (5) and connected to the positive terminal (8) of the battery (9) and the electrical ground (13) of the vehicle, normally corresponding to the negative pole of the battery (9).

3. Channel activating device according to the above claims, **characterized in that** the solid state amplifiers take the necessary electrical control signals (4) from the connector block for the rear lights (5) of the vehicle (6), and when any of them is activated, produce the electrical connection of the corresponding output channel (7) to the positive voltage (8) coming from the battery (9) of the vehicle (6), without direct consumption of current from the rear lights (5).

4. Channel activating device according to the above claims, **characterized in that** there is a return line (11) for the trailer's fog lights that, through another electronic switch, optionally causes automatic disconnection of the vehicle's fog lights (5) when the trailer is connected to the multipolar electrical connector (12), it being necessary for this installation to cut the original cabling (14) for the vehicle's fog lights (6).

5. Channel activating device according to the above claims, **characterized in that** a priority variant for implementation incorporates 6 activation channels and therefore 6 solid state amplifiers (1), corresponding to standard 7-pole connectors (12).

6. Channel activating device according to the above claims, **characterized in that** another priority variant for implementation incorporates 7 activation channels, and therefore 7 solid state amplifiers (1), corresponding to standard 13-pole connectors (12), in which the 6 remaining poles are connected directly.

7. Channel activating device according to the above claims, **characterized in that,** optionally, the same box (2) can include the circuitry needed to detect and indicate a burned-out element in any of the electrical signals used for luminous indication in the trailer or similar equipment connected to the vehicle, this circuitry consisting of including current sensing elements (18) in each of the output channels (7) that detect the absence of electrical current **in that** channel (7) when it is activated, detecting that the filament of the lamp associated with that channel has burned out and communicating this anomalous situation to a detection module (18) that centralizes the indicator signals coming from all current sensing elements (18) of the box (2), indicating a failure in any of the channels through a line (20) that communicates with a warning device (19) in the vehicle, which can be light or sound, indication in the vehicle's dashboard panel, or any combination thereof.

8. Channel activating device, according to the above claims, **characterized in that,** optionally, the same box (2) can include the circuitry needed to disable the operation of the vehicle's rear parking sensors (24) when connection of the trailer or similar is detected, this circuitry consisting of a supplementary line (21) that is electrically activated when the multipolar electrical connector (12) is physically inserted, the insertion being detected by a control circuit (22) built into the box (2) that proceeds to deactivate the vehicle's rear parking sensors (24) through an enabling line (23).

## Patentansprüche

1. Kanalaktivierungsvorrichtung zur Verwendung mit mehrpoligen elektrischen Anschlüssen (12) von Anhängerkupplungen, die an manchen Fahrzeugen zum Befestigen eines Anhängers oder dergleichen installiert sind, wobei Stromschalter (1) in einem entsprechenden Gehäuse (2) angeordnet sind, das mit geeigneten Eingangs- und Ausgangsanschlüssen (3) für die verschiedenen elektrischen Signale ausgestattet ist, **dadurch gekennzeichnet, dass** sie aus mehreren Halbleiterverstärkern (1) besteht, die direkt mit einem Anschlussblock für die Rücklichter (5) des Fahrzeugs (6) verbunden sind, um die als die Stromschalter wirkenden Halbleiterverstärker (1) anzusteuern, wobei einige der bestimmten Ausgangskanälen (7) zugeordneten Halbleiterverstärker (1) intern für einen optionalen pulsbreitenmodulierten Betrieb konfiguriert sind.

2. Kanalaktivierungsvorrichtung nach dem vorhergehenden Anspruch, **dadurch gekennzeichnet, dass** sie zwischen dem mehrpoligen elektrischen Anschluss (12), welcher sich an der Anhängerkupplung (15) befindet, und dem Anschlussblock für die Rücklichter (5) installiert ist, und mit dem positiven Pol (8) der Batterie (9) und der Erdung (13) des Fahrzeugs, welche normalerweise dem negativen Pol der Batterie (9) entspricht, verbunden ist.

3. Kanalaktivierungsvorrichtung nach einem der vorhergehenden Ansprüchen, **dadurch gekennzeichnet, dass** die Halbleiterverstärker die notwendigen elektrischen Steuersignale (4) vom Anschlussblock für die Rücklichter (5) des Fahrzeugs (6) nehmen, und dass bei Aktivierung von einem der Halbleiterverstärker eine elektrische Verbindung des entsprechenden Ausgangskanals (7) mit der von der Batterie (9) kommenden positiven Spannung (8) des Fahrzeugs (6) hergestellt wird, ohne dass ein direkter Verbrauch des Stromes der Rücklichter (5) erfolgt.

4. Kanalaktivierungsvorrichtung nach einem der vorhergehenden Ansprüchen, **dadurch gekennzeichnet, dass** eine Rückleitung (11) für die Nebelschlussleuchten des Anhängers vorgesehen ist, welche mittels eines weiteren elektronischen Schalters optional zu einer automatischen Abschaltung der Nebelschlussleuchten des Fahrzeugs führt, wenn der Anhänger mit dem mehrpoligen elektrischen Anschluss (12) verbunden ist, wobei für diese Installation die ursprüngliche Verkabelung (14) der Nebelschlussleuchten des Fahrzeugs getrennt sein muss.

5. Kanalaktivierungsvorrichtung nach einem der vorhergehenden Ansprüchen, **dadurch gekennzeichnet, dass** eine bevorzugte Ausführungsform 6 Aktivierungskanäle und dementsprechend 6 Halbleiterverstärker (1) umfasst, die Standard-7-Pol-Anschlüssen (12) entsprechen.

6. Kanalaktivierungsvorrichtung nach einem der vorhergehenden Ansprüchen, **dadurch gekennzeichnet, dass** eine andere bevorzugte Ausführungsform 7 Aktivierungskanäle und dementsprechend 7 Halbleiterverstärker (1) umfasst, die Standard-13-Pol-Anschlüssen (12) entsprechen, wobei die 6 verbleibenden Pole direkt verbunden sind.

7. Kanalaktivierungsvorrichtung nach einem der vorhergehenden Ansprüchen, **dadurch gekennzeichnet, dass** das gleiche Gehäuse (2) optional eine Schaltung zur Detektion und Anzeige eines durchgebrannten Elementes in einer der elektrischen Leuchten beinhaltet, welche der Leuchtanzeige am Anhänger oder ähnlicher, mit dem Fahrzeug verbundener Ausrüstung dienen, wobei diese Schaltung Stromfühlerelement (18) in jeden der Ausgangskanäle (7) umfasst, die das Fehlen eines elektrischen Stroms im Kanal (7) detektieren wenn derselbe aktiviert ist, und so ein Durchbrennen des Glühfadens der dem Kanal zugeordneten Leuchte erkennen und diesen fehlerhaften Zustand an ein Detektionsmodul (18) kommunizieren, welches die Indikatorsignale aller Stromfühlerelemente (18) des Gehäuses (2) zentralisiert, und welches so ein Versagen in einem der Kanäle mittels einer Leitung (20) anzeigt, die mit einer Warneinrichtung (19) im Fahrzeug kommuniziert, die ein Licht, ein Ton, eine Anzeige im Armaturenbrett des Fahrzeugs, oder eine beliebige Kombination derselben sein kann.

8. Kanalaktivierungsvorrichtung nach einem der vorhergehenden Ansprüchen, **dadurch gekennzeichnet, dass** das gleiche Gehäuse (2) optional eine Schaltung zum Deaktivieren des Betriebs der hinteren Einparksensoren (24) beinhaltet, wenn eine Verbindung der Anhänger oder dergleichen erkannt wird, wobei diese Schaltung aus einer Zusatzleitung (21) besteht, die elektrisch aktiviert wird, wenn der mehrpolige elektrische Anschluss (12) physisch eingeschoben wird, und wobei dieses Einschieben durch einen in das Gehäuse (2) eingebauten Regelkreis (22) erkannt wird, welcher in der Folge die hinteren Einparksensoren (24) des Fahrzeugs mittels einer Freigabeleitung (23) deaktiviert.

## Revendications

1. Dispositif d'activation de canal utilisé conjointement avec les connecteurs électriques multipolaires (12) des attelages installés sur certains véhicules pour la fixation d'une remorque ou d'un équipement similaire dans lequel des interrupteurs de courant (1) sont logés dans un boîtier adapté (2), équipé de connecteurs d'entrée et de sortie (3) adéquats aux différents signaux électriques, **caractérisé en ce qu'**il consiste en de multiples amplificateurs à semi-conducteurs (1) directement connectés au bloc de connexion des feux arrières (5) du véhicule (6) pour le fonctionnement des amplificateurs à semi-conducteurs (1) agissant comme des interrupteurs de courant, dans lequel certains amplificateurs à semi-conducteurs (1) correspondant à certains canaux de sortie (7) sont configurés de manière interne pour un fonctionnement optionnel en mode Modulation d'impulsions en durée.

2. Dispositif d'activation de canal selon la revendication ci-dessus, **caractérisé en ce qu'**il est installé entre le connecteur électrique multipolaire (12) situé dans l'attelage pour la remorque (15) et le bloc de connexion pour les feux arrières (5) et connecté à la borne positive (8) de la batterie (9) et à la mise électrique à la terre (13) du véhicule, correspondant généralement à la borne négative de la batterie (9).

3. Dispositif d'activation de canal selon les revendications ci-dessus, **caractérisé en ce que** les amplificateurs à semi-conducteurs reçoivent les signaux de commande électriques nécessaires (4) du bloc de connexion pour les feux arrières (5) du véhicule (6), et que lorsque l'un d'entre eux est activé, une liaison électrique entre le canal de sortie correspondant (7) et la tension positive (8) provenant de la batterie (9) du véhicule (6) est établie, sans consommation directe du courant de la part des feux arrières (5).

4. Dispositif d'activation de canal selon les revendications ci-dessus, **caractérisé en ce qu'**il comprend une conduite de retour (11) pour les feux antibrouillards de la remorque qui, via un autre interrupteur électronique, permet facultativement la déconnexion automatique des feux antibrouillards (5) du véhicule lorsque la remorque est connectée au connecteur électrique multipolaire (12), la coupure du câblage d'origine (14) des feux antibrouillards (6) du véhicule étant nécessaire pour cette installation.

5. Dispositif d'activation de canal selon les revendications ci-dessus, **caractérisé en ce qu'**une variante d'installation avantageuse comprend 6 canaux d'activation et par conséquent 6 amplificateurs à semi-conducteurs (1), correspondant à des connecteurs à 7 pôles standard (12).

6. Dispositif d'activation de canal selon les revendications ci-dessus, **caractérisé en ce qu'**une autre variante d'installation avantageuse comprend 7 canaux d'activation et par conséquent 7 amplificateurs à semi-conducteurs (1), correspondant à des connecteurs à 13 pôles standard (12), dans lesquels les 6 pôles restants sont directement connectés.

7. Dispositif d'activation de canal selon les revendications ci-dessus, **caractérisé en ce que,** de manière facultative, le même boîtier (2) peut inclure l'ensemble des circuits nécessaires pour détecter et indiquer un élément grillé dans n'importe quel des feux utilisé pour l'indication lumineuse sur la remorque ou tout équipement similaire connecté au véhicule, ces circuits se composant d'éléments de détection de courant (18) inclus dans chacun des canaux de sortie (7) qui détectent l'absence de courant électrique dans ce canal (7) lorsque celui-ci est activé, détectant ainsi que le filament de l'ampoule associée à ce canal est grillé et communiquant cet état anormal à un module de détection (18) qui centralise les signaux indicateurs en provenance de l'ensemble des éléments de détection de courant (18) du boîtier (2), indiquant ainsi une panne dans un des canaux via une conduite (20) qui communique avec un dispositif d'alerte (19) à l'intérieur du véhicule, qui peut être une indication lumineuse ou sonore sur le tableau de bord du véhicule ou toute combinaison des deux.

8. Dispositif d'activation de canal selon les revendications ci-dessus, **caractérisé en ce que,** de manière facultative, le même boîtier (2) peut inclure l'ensemble des circuits nécessaires pour désactiver le fonctionnement des capteurs de stationnement arrière (24) du véhicule lorsque la connexion de la remorque ou d'un équipement similaire est détectée, ces circuits comprenant une conduite supplémentaire (21) activée électriquement lorsque le connecteur électrique multipolaire (12) est physiquement inséré, l'insertion étant détectée par un circuit de réglage (22) intégré dans le boîtier (2) qui procède à la désactivation des capteurs de stationnement arrière (24) du véhicule via une conduite d'activation (23).
